# EUROPEAN PATENT APPLICATION

(11) **EP 2 249 606 A1**
(43) Date of publication of application: **10.11.2010**
(21) Application number: 09159637.9
(22) Date of filing: 07.05.2009
(51) Int. Cl.: H04W 48/08

(54) **Method for reducing a cognitive pilot channel bandwidth**

(71) Applicant: NEC Corporation, Minato-ku Tokyo 108-8001 (JP)
(72) Inventor: Tring, Jérôme, 77185, LOGNES (FR); Korbaa, Lahouari, 91940, LES ULIS (FR); Mouhouche, Belkacem, 91300, MASSY (FR)
(74) Representative: Ilgart, Jean-Christophe

(57) **Abstract**

The invention relates to a method for reducing a Cognitive Pilot Channel (CPC) bandwidth used for transmitting lists of information to a plurality of meshes of a geographical area comprising at least one base station covering n meshes to allow a User Equipment camping on a given mesh among said plurality of meshes to select an operator and/or an access technology and/or a communication frequency available in said given mesh.

The method according to the invention comprises the following steps:
- predicting by means of a prediction module implemented in the base station and in the User Equipment a list of information to be broadcast in said given mesh,
- generating a modified list of information based on the predicted list of information,
- broadcasting only said modified list of information in said given mesh.

## Description

### TECHNICAL DOMAIN

The invention pertains to telecommunication field and concerns a method for reducing the bandwidth of a Cognitive Pilot Channel (CPC) used for broadcasting information from a base station (4) to a geographical area comprising a plurality of meshes Mᵢ (i = 1 to n), n being an integer, to allow a User Equipment located in a given mesh of said geographical area to select an operator and/or an access technology and/or a communication frequency available in said given mesh, said method comprising the following steps:
- defining a reference mesh Mⱼ in said geographical area,
- defining a reference list of information to broadcast in said reference mesh Mⱼ,
- broadcasting said reference list in said reference mesh Mⱼ.

The invention also concerns a base station broadcasting a Cognitive Pilot Channel (CPC) carrying lists of information on operators, access technology and radio frequencies available in a geographical area comprising a plurality of meshes Mᵢ (i = 1 to n), n being an integer, to allow a User Equipment located in a given mesh of said geographical area to select an operator and/or an access technology and/or a communication frequency available in said given mesh, said base station (4) comprising:
- means for defining a reference mesh Mⱼ in said geographical area,
- means for defining a reference list of information to broadcast in said reference mesh Mⱼ,
- means for broadcasting said reference list in said reference mesh Mⱼ.

The invention further concerns User Equipment (UE) located in a geographical area comprising a plurality of meshes Mᵢ (i = 1 to n), n being an integer, and a base station broadcasting a Cognitive Pilot Channel (CPC) carrying lists of information on operators, access technology and radio frequencies in said meshes Mᵢ (i = 1 to n) in order to allow said User Equipment to select an operator and/or an access technology and/or a communication frequency available in the mesh where said UE is located.

### STATE OF PRIOR ART

Cognitive Pilot Channel (CPC) is a concept used in cognitive radio to provide information to cognitive mobiles about the available operators, Radio Access Technologies (RAT) and Frequencies available in a geographical area.

Two Major concepts for Cognitive Pilot Channel are proposed by the E3 project and ETSI RRS Group: Mesh based and Optimised broadcast approach.
- Mesh based concept in which a cell in the geographical area is divided into a plurality of meshes and information is provided about operators, RAT and Frequencies available in each mesh.
- Optimised broadcast concept in which information about all the RATs and frequencies available in the cells is transmitted.

Although Mesh based concept is more precise than Optimised broadcast concept, it presents a drawback resulting from the fact that the transmission of information to the meshes requires a larger frequency band to be allocated to CPC.

One of the proposed methods to reduce the CPC data rate is to transmit the same CPC for the whole cell, not to meshes of said cell, and transmit the coverage area for each technology and frequency. The problem with this kind of approach is that coverage areas are not easily characterized and transmitting a detailed coverage area may result in a large data-rate as well.

The present invention aims at reducing the CPC data rate.

Another object of the invention is to reduce the CPC message length to enable a shorter period between mesh information occurrences for the same bit rate.

The invention also aims at reducing the required bandwidth for the CPC use while increasing CPC message robustness.

### PRESENTATION OF THE INVENTION

The invention is based on the fact that adjacent meshes usually differ by only few frequencies.

Thus instead of transmitting the whole information each time, the basic concept of in the method according to the invention consists in transmitting in a first time all the information to a reference mesh, and predicting the information to transmit subsequently to each other mesh of the geographical area.

This object is achieved by means of a method for reducing the bandwidth of a Cognitive Pilot Channel (CPC) used for broadcasting information from a base station to a geographical area comprising a plurality of meshes Mᵢ (i = 1 to n), n being an integer, to allow a User Equipment located in a given mesh of said geographical area to select an operator and/or a Radio Access Technology and/or a radio frequency available in said given mesh Mᵢ (i = 1 to n), said method comprising the following steps :
- defining a reference mesh Mⱼ in said geographical area,
- defining a reference list of information to broadcast in said reference mesh Mⱼ,
- broadcasting said reference list in said reference mesh Mⱼ,
   said method **characterized in that** it further comprises the following steps :
- predicting by means of a prediction module implemented in the base station and in the User Equipment a list of information to be broadcast in said given mesh,
- generating a modified list of information based on the predicted list of information,
- broadcasting only said modified list of information in said given mesh.

According to a first variant of the invention, the modified list includes only information not predicted by the UE in the mesh where it is located.

According to a second variant of the invention, the modified list does not contain the information predicted by the EU but not detectable by said EU in the mesh where it is located.

Preferably, the prediction of the list of information to be broadcast in a mesh Mi, (i = 1 to n), where the UE is located comprises the following steps:
- calculating the number of occurrence of Operators and/or RATs and/or radio frequencies present in the lists of information previously broadcasted by the base station in meshes Mⱼ (j = 1 to i),
- defining a threshold T for said number of occurrences,
- including said Operators and/or RATs and/or Frequencies in the modified list of information to be broadcast in said given mesh Mi if the number of occurrence exceeds the threshold T.

Preferably, the Operators and/or RATs and/or radio frequencies are predicted to be present if the number of occurrence is greater than the threshold T and if said Operators and/or RATs and/or Frequencies are present in a predefined position with respect to the mesh Mi (i = 1 to n).

For example if a frequency is available both in a mesh located at the left and at the right of said mesh Mᵢ (i = 1 to n), then said frequency is predicted to be available in said mesh Mᵢ (i = 1 to n).

In order to avoid error propagation, the base station transmits periodically a plurality of reference meshes to the geographical area.

The transmission periodicity is chosen depending on the reliability of the Cognitive Pilot Channel decoding.

### BRIEF DESCRIPTION OF THE FIGURES

The forgoing summary, as well as the following detailed description, will be better understood when read in conjunction with the appended figures illustrating an exemplary embodiment of the invention in which:
- figure 1 schematically represents an area in which the method according to the invention is implemented;
- figure 2 is flow chart illustrating the steps of the CPC transmission procedure according to the invention.
- figure 3 is flow chart illustrating the steps of the prediction procedure according to the invention.

### DESCRIPTION OF A DETAILED EMBODIMENT OF THE INVENTION

The invention will be described when implemented in a geographical area 2 divided into a number n of contiguous elementary meshes covered by at least one wireless telecommunication network and in which a Cognitive Pilot Channel is used by a base station 4 for broadcasting information on the operators, Radio Access technologies (RATs) and radio frequencies available in said geographical area 2 to allow cognitive receiver such as mobile phones, PDA, or laptops to choose the most convenient operator, RAT and frequency for communicating in the network.

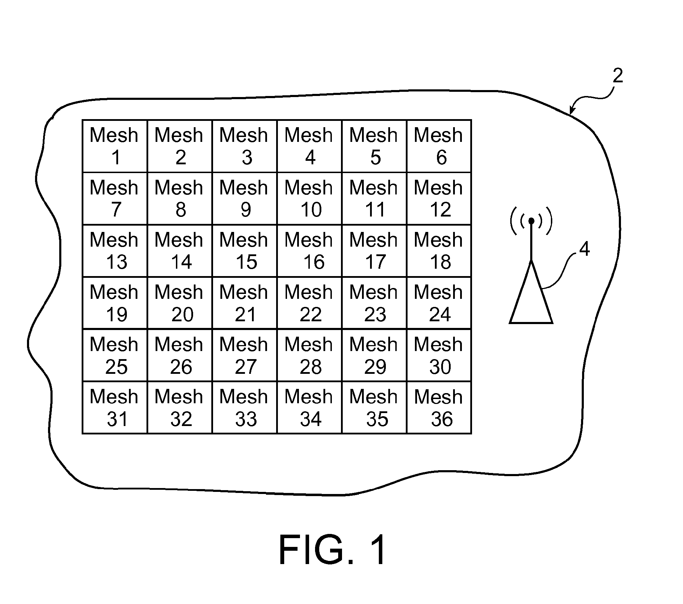

As illustrated by figure 1, the geographical area 2 is divided into n = 36 (thirty six) contiguous elementary meshes covered by the base station 4 that broadcasts a Cognitive Pilot Channel (CPC) carrying lists of information on operators, access technology and radio frequencies available for each mesh Mᵢ (i = 1 to 36).

The base station 4 comprises means for defining a reference mesh Mᵣ in the geographical area 2, means for defining a reference list of information to broadcast in said reference mesh Mᵣ, means for broadcasting said reference list in said reference mesh Mᵣ. Said base station further comprises a prediction module for predicting a list of information to be broadcast in the mesh Mᵢ (i = 1 to 36) where said UE is located, means for generating a modified list of information based on the predicted list of information, and means for broadcasting only said modified list of information in the mesh Mᵢ (i = 1 to 36) where said UE is located.

A processing module located in the base station 4 comprises means for defining a reference list of information, means for associating said reference list of information to the reference mesh Mᵣ, means for associating an identifier to said reference mesh Mᵣ.

The base station 4 further comprises means for filtering the predicted list to generate a modified list including only information not predicted by the UE in the mesh Mᵢ (i = 1 to 36) where said UE is located and not including information predicted by the EU but not detectable by said EU in said mesh Mᵢ (i = 1 to 36).

The User Equipment also comprises a prediction module for predicting a list of information to be broadcast in said mesh Mᵢ (i = 1 to 36). Said prediction module is adapted to calculate a modified list of information including only information not predicted by the UE in the mesh Mᵢ (i = 1 to 36) where said UE is located and not including information predicted by the EU but not detectable by said EU in said mesh Mᵢ (i = 1 to 36).

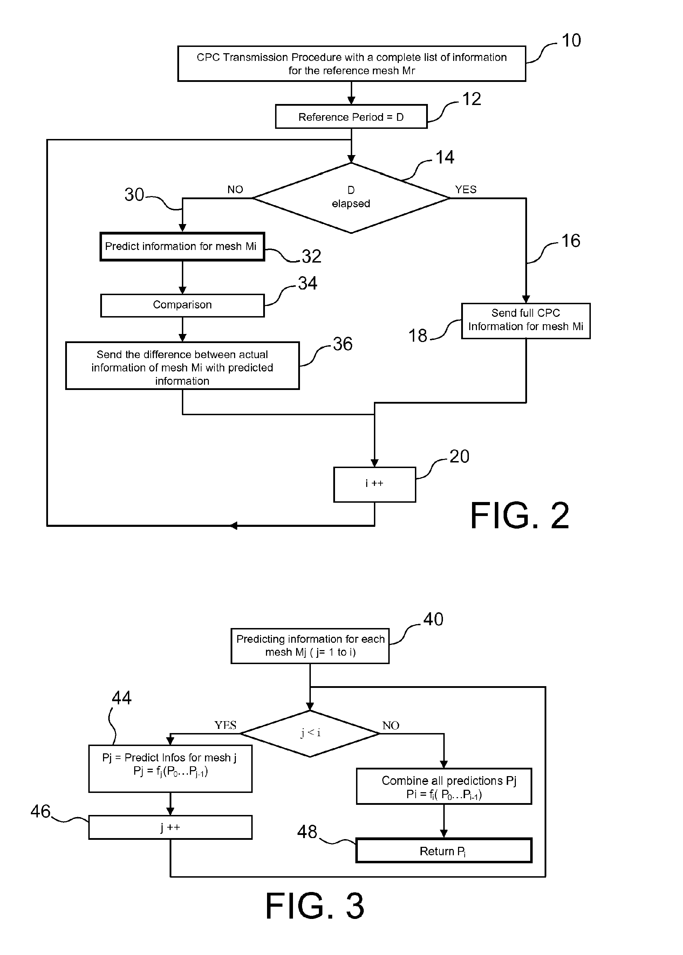

Figure 2 illustrates the steps of the transmission of the CPC from the base station 4 to the meshes Mᵢ (i = 1 to 36).

In a first time, before broadcasting the information indicating the operators, the Radio access technology and the communication frequency available in each mesh Mᵢ (i = 1 to 36), the base station 4 transmits to the reference mesh Mᵣ, at step 10, a complete list of information indicating the operators, the Radio access technology and the communication frequency available in the geographical area 2.

At step 12, the base station 4 sets an information transmission delay D separating two successive transmission of information to the successive meshes. The value D depends on the size of the geographical area 2 and the transmission conditions therein.

At step 14, the processing module of the base station 4 checks whether the period D has elapsed or not.

If the period D has elapsed (arrow 16), the base station 4 re-transmits, at step 18, the complete list of information to the mesh Mᵢ (i = 1 to 36) currently receiving said information.

At step 20, the processing module increments the rank of the mesh to receive the list of information and re-runs the process from step 14.

If the period D has not elapsed (arrow 30), at step 32, the predicting modules of the base station 4 predicts the information to broadcast in a given mesh Mᵢ (i = 1 to 36 and i ≠ r) where the UE is located. This prediction operation is run simultaneously by the UE.

At step 34, the processing module of the base station 4 compares the predicted list of information with the actual list of information to be transmitted to said mesh Mᵢ (i = 1 to 36 and i ≠ r).

It is to be noted that said actual list of information is supplied to the processing module during the deployment phase of the network in the geographical area 2.

If the predicted list is identical to the actual list, the processing module considers that the list to transmit to mesh Mᵢ (i = 1 to 36 and i ≠ r) is the predicted list.

In this case, the base station 4 does not transmit any list to the mesh Mᵢ (i = 1 to 36 and i ≠ r) since the predicted list is also predicted by the UE.

Else, at step 36, the processing module generates a modified list of information comprising only information not predicted by the UE in the mesh where it is located.

Then, the base station 4 broadcasts said modified list of information in said given mesh Mᵢ (i = 1 to 36 and i ≠ r).

In another embodiment of the invention, the processing module withdraws from the predicted list any predicted information that is not detectable by the EU in the mesh Mᵢ (i = 1 to 36 and i ≠ r) where the EU is located.

The base station 4 broadcasts said modified list of information in said mesh Mᵢ (i = 1 to 36 and i ≠ r).

At step 20, the processing module increments i and re-runs the process from step 14.

Figure 3 is a flow chart illustrating the steps of the prediction procedure of the modified list of information to broadcast in mesh Mᵢ (i = 1 to 36 and i ≠ r).

At step 40, the predicting module predicts the list of information to transmit to each mesh Mⱼ (j = 1 to i).

At step 42, the processing module compares j to i.

If j<i, the the prediction module of the base station predicts the lists of information for each mesh Mⱼ (j = 1 to i) (step 44), increments j (step 46) and returns said predicted list to the base station 4 at step 48.

If j>i, the prediction module of the base station 4 combines the lists predicted for each mesh Mⱼ (j = 1 to i), generates from said combination a modified list of information to broadcast in mesh Mᵢ (i = 1 to 36 and i ≠ r) (step 50) and returns said modified list to the base station 4 at step 48 .

When all the meshes have received the list of information, the base station stops the broadcasting process.

## Claims

1. A method for reducing the bandwidth of a Cognitive Pilot Channel (CPC) used for broadcasting information from a base station (4) to a geographical area comprising a plurality of meshes Mᵢ (i = 1 to n), n being an integer, to allow a User Equipment located in a given mesh of said geographical area (2) to select an operator and/or a Radio Access Technology (RAT) and/or a communication frequency available in said given mesh Mᵢ, said method comprising the following steps:
- defining a reference mesh Mᵣ in said geographical area,
- defining a reference list of information to broadcast in said reference mesh Mᵣ,
- Broadcasting said reference list in said reference mesh Mᵣ, said method **characterized in that** it further comprises the following steps:
- predicting by means of a prediction module implemented in the base station (4) and in the User Equipment (UE)a list of information to be broadcast in said given mesh Mᵢ (i = 1 to n),
- generating a modified list of information based on the predicted list of information,
- broadcasting only said modified list of information in said given mesh Mᵢ (i = 1 to n).

2. A method according to claim 1 wherein the modified list includes only information not predicted by the UE in the mesh Mᵢ (i = 1 to n) where said UE is located.

3. A method according to claim 1 wherein the modified list does not contain the information predicted by the EU but not detectable by said EU in the mesh Mᵢ (i = 1 to n) where said UE is located.

4. A method according to claim 1 wherein the prediction of the list of information to be broadcast in a mesh Mi, (i = 1 to n), where the UE is located comprises the following steps:
- calculating the number of occurrence of Operators and/or RATs and/or Frequencies present in the lists of information previously broadcasted by the base station (4) in meshes Mⱼ (j = 1 to i),
- defining a threshold T for said number of occurrences,
- including said Operators and/or said Radio Access Technologies (RATs) and/or said radio frequencies in the modified list of information to be broadcast in said given mesh Mi, (i = 1 to n), if the number of occurrence exceeds the threshold T.

5. A method according to claim 4 wherein the Operators and/or RATs and/or Frequencies are predicted to be present in said given mesh Mi, (i = 1 to n), if the number of occurrence is greater than the threshold T and if said Operators and/or RATs and/or Frequencies are present in a predefined positions with respect to said mesh Mi, (i = 1 to n).

6. A base station (4) adapted for broadcasting a Cognitive Pilot Channel (CPC) carrying lists of information on operators, Radio Access Technologies and radio frequencies available in a geographical area (2) comprising a plurality of meshes Mᵢ, (i = 1 to n), n being an integer, to allow a User Equipment located in a given mesh Mi, (i = 1 to n), in said geographical area (4) to select an operator and/or an access technology and/or a communication frequency available in said given mesh Mᵢ (i = 1 to n), said base station (4) comprising:
- means for defining a reference mesh Mᵣ in said geographical area (2),
- means for defining a reference list of information to broadcast in said reference mesh Mᵣ,
- means for broadcasting said reference list in said reference mesh Mᵣ, said base station (4) **characterized by**:
- a prediction module for predicting a list of information to be broadcast in the mesh Mᵢ (i = 1 to n) where said UE is located,
- means for generating a modified list of information based on the predicted list of information,
- means for broadcasting only said modified list of information in the mesh Mᵢ (i = 1 to n) where said UE is located.

7. A base station (4) according to claim 6 further comprising means for filtering the predicted list to generate a modified list including only information not predicted by the UE in the mesh Mᵢ (i = 1 to n) where said UE is located and not including information predicted by the EU but not detectable by said EU in said mesh Mᵢ (i = 1 to n).

8. A User Equipment located in a geographical area (2) comprising a plurality of meshes Mᵢ (i = 1 to n), n being an integer, and a base station (4) adapted for broadcasting a Cognitive Pilot Channel (CPC) carrying lists of information on operators, Radio Access Technologies (RATs) and radio frequencies available in said meshes Mᵢ (i = 1 to n) in order to allow said UE to select an operator and/or a RAT and/or a communication frequency available in the mesh where said UE is located, said User Equipment **characterized by** a prediction module for predicting a list of information to be broadcast in the mesh Mᵢ (i = 1 to n) where said UE is located.

9. A User Equipment according to claim 8 wherein said prediction module is adapted to calculate a modified list of information including only information not predicted by the UE in the mesh Mᵢ (i = 1 to n) where said UE is located and not including information predicted by the EU but not detectable by said EU in said mesh Mᵢ (i = 1 to n).
